(19) Europäisches Patentamt
European Patent Office
Office européen des brevets

(11) **EP 3 199 316 A1**

(12) **EUROPEAN PATENT APPLICATION**
published in accordance with Art. 153(4) EPC

(43) Date of publication:
**02.08.2017 Bulletin 2017/31**

(51) Int Cl.:
**B29B 11/16** (2006.01)   **C08J 5/04** (2006.01)
**C08J 5/24** (2006.01)

(21) Application number: **15843148.6**

(22) Date of filing: **03.09.2015**

(86) International application number:
**PCT/JP2015/075043**

(87) International publication number:
**WO 2016/047412 (31.03.2016 Gazette 2016/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **25.09.2014   JP 2014195529**

(71) Applicant: **Toray Industries, Inc.**
**Tokyo 103-8666 (JP)**

(72) Inventors:
• **MIYOSHI Katsuhiro**
  **Nagoya-shi**
  **Aichi 455-8502 (JP)**
• **KIMOTO Yukitane**
  **Nagoya-shi**
  **Aichi 455-8502 (JP)**
• **HASHIMOTO Takafumi**
  **Nagoya-shi**
  **Aichi 455-8502 (JP)**

(74) Representative: **Hoefer & Partner Patentanwälte
mbB
Pilgersheimer Straße 20
81543 München (DE)**

(54) **REINFORCING FIBER COMPOSITE MATERIAL**

(57)   A reinforcing fiber composite material characterized by comprising discontinuous reinforcing fibers containing discontinuous reinforcing fiber aggregates and a matrix resin, wherein a fan-shaped discontinuous reinforcing fiber aggregate (A) is contained at an amount of 5% by weight or more in the discontinuous reinforcing fibers, and wherein the fan-shaped discontinuous reinforcing fiber aggregate (A) has a fan-like section in which an aspect ratio at least at one end part of a discontinuous reinforcing fiber aggregate (the width of the discontinuous reinforcing fiber aggregate/the thickness of the discontinuous reinforcing fiber aggregate) is 1.5 times or more relative to an aspect ratio at a narrowest part at which the width of the discontinuous reinforcing fiber aggregate is smallest when the discontinuous reinforcing fiber aggregate is projected two-dimensionally. It becomes possible to provide an excellent reinforcing fiber composite material which can achieve all of excellent flowability during molding, high mechanical properties of a molded article and two-dimensional isotropy at a good balance, and further, which exhibits less fluctuation in the mechanical properties.

FIG. 1

**Description**

Technical Field of the Invention

The present invention relates to a reinforcing fiber composite material comprising discontinuous reinforcing fibers and a matrix resin, and specifically, to a reinforcing fiber composite material which is excellent in mechanical strength, two-dimensional isotropy and uniformity by employing a formation where the discontinuous reinforcing fibers are contained in the reinforcing fiber composite material at a specified aggregate form different from conventional ones, and which makes it possible to achieve both high flowability and mechanical properties when making a molded article using it,

Background Art of the Invention

Reinforcing fiber composite materials comprising reinforcing fibers and a matrix resin are used for manufacturing various molded articles because high mechanical properties can be obtained, and the demand thereof in various fields is increasing year by year.

As a molding method of a reinforcing fiber composite material having high functionalities, an autoclave molding is most commonly performed wherein semi-cured intermediate base materials each impregnated with a matrix resin in continuous reinforcing fibers, called a prepreg, are laminated, and by heating and pressurizing them in a high-temperature and high-pressure oven, a continuous fiber reinforcing composite material cured with the matrix resin is molded. Further, recently, for the purpose of improving productivity, an RTM (Resin Transfer Molding) method, wherein a matrix resin is impregnated into a continuous fiber base material previously formed in a member shape and cured, has also been carried out. The reinforcing fiber composite material obtained by these molding methods has excellent mechanical properties because of continuous fibers. Further, since the continuous fibers are regularly arranged, it is possible to design required mechanical properties by the disposition of the base materials, and the fluctuation of the mechanical properties is also small. On the other hand, however, it is difficult to form a complicated shape such as a three-dimensional shape because of continuous fibers, and its application is limited mainly to members close to a planar shape.

As molding methods suitable for complicated shapes such as three-dimensional shapes, molding using SMC (Sheet Molding Compound) or stampable sheet and the like are known. An SMC molded article is obtained by heating and pressurizing sheet-like base materials (SMC), prepared by cutting a strand of reinforcing fibers in a direction perpendicular to the fibers such that the fiber length becomes, for example, about 25 mm, impregnating a matrix resin of a thermosetting resin into the chopped strands and curing the resin to a semi-cured condition, using a heating type press machine. A stampable sheet molded article is obtained by once heating a sheet-like base material (stampable sheet), prepared by impregnating a thermoplastic resin into a non-woven fabric mat or the like composed of chopped strands cut to, for example, about 25 mm or discontinuous reinforcing fibers, to a temperature of not lower than the melting point of the thermoplastic resin using an infrared heater and the like, and cooling and pressurizing it with a mold of a predetermined temperature.

In many cases, the SMC or the stampable sheet is cut to a size smaller than the shape of a molded body before pressurization and placed on a mold, and the molding is performed by stretching (flowing) to the shape of the molded body by pressurization. Therefore, by the flowing, a complicated shape such as a three-dimensional shape can be followed. However, in the SMC or the stampable sheet, because a distribution unevenness or an orientation unevenness inevitably of the chopped strands or the non-woven fabric mat inevitably occurs in the sheet forming process thereof, the mechanical properties are lowered or the fluctuation of the values thereof becomes large. Furthermore, by the distribution unevenness or the orientation unevenness, sagging, sink marks, etc. tend to occur particularly in thin members.

In order to fill up the drawbacks of the above-described materials, for example, in Patent documents 1 and 2, a carbon fiber mat is proposed wherein a carbon fiber bundle as a reinforcing fiber bundle is divided in the width direction after being once widened, and by cutting the divided carbon fiber bundles, a weight average fiber width of specified carbon fiber bundles in a discontinuous carbon fiber mat is defined. However, when the carbon fiber bundle is divided in the width direction as described in Patent documents 1 and 2, it leads to an increase in the number of contact points between the carbon fibers in the obtained carbon fiber composite material, and the flowability deteriorates. Further, the width and the thickness of the fiber aggregate in the carbon fiber mat are defined on a basis in that the fiber aggregate has an approximately uniform columnar shape with a rectangular or elliptical cross-sectional shape relative to the longitudinal direction (fiber length direction) of the fiber aggregate, and a carbon fiber mat having a narrow fiber width is excellent in mechanical properties of a carbon fiber composite material molded article produced using the carbon fiber mat as the fiber thickness is smaller, but it has a poor flowability during molding and poor moldability. This is because the reinforcing effect due to the carbon fibers is sufficiently exhibited because the carbon fibers as the reinforcing fiber are sufficiently dispersed so that a stress is hard to be concentrated, and on the other hand, because the carbon fibers intersect each other, the carbon fibers constrain each other and therefore, become difficult to move.

Further, the carbon fiber mat having a large fiber width tends to have a wide contact area between the fibers and restricts movement of each other to make it difficult to move, and therefore, flowability during molding is difficult to be exhibited, and the moldability is poor. Further, the greater the fiber thickness is, the better the flowability during molding of the carbon fiber composite material molded article produced by using the same is, but the followability to a mold for molding a molded article having a complicated shape such as a rib or the like or having a small thickness is poor, and the mechanical properties are low. This is because the carbon fiber bundle is thick, since the carbon fibers do not form a network, it is easy to move in the early stage of flowing, but when molding a molded article having a complicated shape such as a rib or the like or having a small thickness, the carbon fiber bundles are entangled with each other, thereby obstructing the flowing of the matrix resin, and in addition, a stress tends to be concentrated at the end part of the carbon fiber bundle.

Furthermore, although Patent document 3 describes a carbon fiber composite material in which strands are opened and then cut and impregnated with a thermosetting resin and a method for producing the same, similarly to in Patent documents 1 and 2, the carbon fiber width and thickness are defined on a basis in that the fiber aggregate has an approximately uniform columnar shape with a rectangular or elliptical cross-sectional shape relative to the longitudinal direction (fiber length direction) of the fiber aggregate, and in the carbon fiber sheet having a large fiber width, although the greater the fiber thickness is, the better the flowability during molding of the carbon fiber composite material molded article produced by using the same is, the followability to a mold for molding a molded article having a complicated shape such as a rib or the like or having a small thickness is poor, and the mechanical properties are low. Further, the smaller the fiber thickness is, the mechanical properties of the carbon fiber composite material molded article produced by using the same are excellent, but the followability is poor.

Prior art documents

Patent documents

    Patent document 1: WO2014/201315
    Patent document 2: WO2014/021316
    Patent document 3: JP-A-2008-254191

Summary of the Invention

Problems to be solved by the Invention

Accordingly, an object of the present invention is to provide a reinforcing fiber composite material which can satisfy both high flowability during molding and high mechanical properties at a high level that have not been able to be achieved in the conventional reinforcing fiber composite materials comprising reinforcing fibers and a resin, and in particular, which has optimum conditions exhibiting excellent flowability and excellent mechanical properties at the time of molding by flowing.

Means for solving the Problems

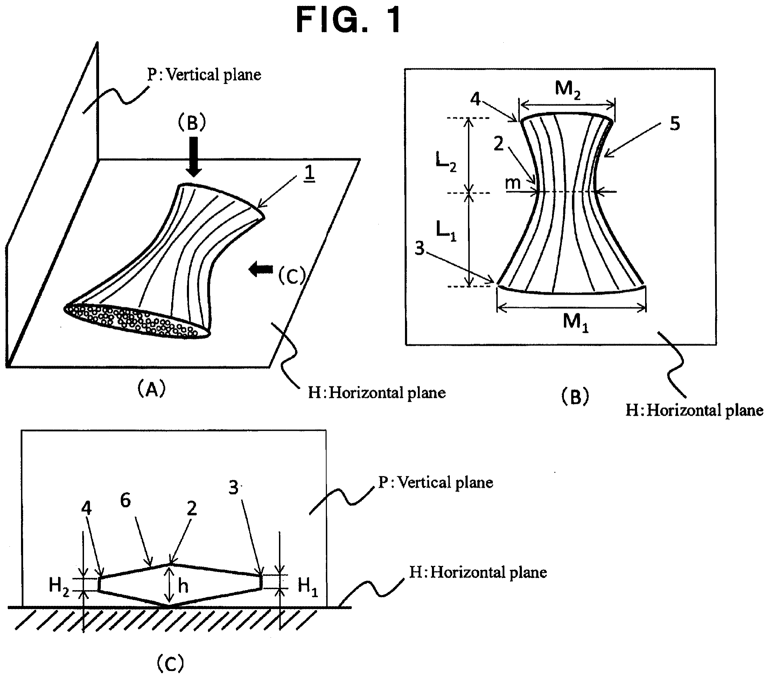

In order to solve the above-described problems, a reinforcing fiber composite material according to the present invention comprises discontinuous reinforcing fibers containing at least discontinuous reinforcing fiber aggregates and a matrix resin, wherein a fan-shaped discontinuous reinforcing fiber aggregate (A) is contained at an amount of 5% by weight or more in the discontinuous reinforcing fibers, and wherein the fan-shaped discontinuous reinforcing fiber aggregate (A) has a fan-like section in which an aspect ratio at least at one end part of a discontinuous reinforcing fiber aggregate (a width of the discontinuous reinforcing fiber aggregate Mn/a thickness of the discontinuous reinforcing fiber aggregate Hn, shown in Fig. 1 (B) and (C) described later, here, "n" indicates a position of any one end part of the discontinuous reinforcing fiber aggregate, and n = 1 or 2) is 1.5 times or more relative to an aspect ratio (m/h) at a narrowest part at which a width of the discontinuous reinforcing fiber aggregate in a direction across an orientation direction of the discontinuous reinforcing fibers is smallest when the discontinuous reinforcing fiber aggregate is projected two-dimensionally.

In such a reinforcing fiber composite material according to the present invention, although the flowability of the composite material during molding decreases when the reinforcing fibers enter into the matrix resin, the decrease of the flowability can be suppressed by increasing the blending amount of the discontinuous reinforcing fibers having an aggregate formation, and it becomes possible to realize a good flowability. However, as compared with a case where the discontinuous reinforcing fiber aggregate is constant in width and thickness of the aggregate in the longitudinal direction (fiber orientation direction) of the reinforcing fiber aggregate, for example, such as in a columnar shape with a rectangular or elliptical cross-sectional shape relative to the longitudinal direction of the reinforcing fiber aggregate, in case where the width of the aggregate is large and the thickness thereof is large, the mechanical properties tend to be poor but the flowability tends to be excellent, and on the contrary, in case where the width of the aggregate is large and the thickness thereof is small, the mechanical properties tend to be excellent but the flowability tends to be poor. Further, in case where the width of the aggregate is small and the thickness thereof is large, the mechanical properties tend to be poor but the flowability tends to be excellent, and in case where the width of the aggregate is small and the thickness thereof is small, the mechanical properties tend to be excellent but the flowability tends to be poor. Namely, comprehensively considering the fact that an optimum form of discontinuous reinforcing fiber aggregate making much of good flowability and an optimum form of discontinuous reinforcing fiber aggregate making much of high mechanical properties do not necessarily become same form, etc., the structure of the discontinuous reinforcing fibers in the reinforcing fiber composite material is optimized so as to satisfy, in particular, both good flowability and high mechanical properties at a good balance.

With respect to the discontinuous reinforcing fiber aggregates contained in the discontinuous reinforcing fibers, it is preferred that the fan-shaped discontinuous reinforcing fiber aggregates (A), each having a fan-like section in which the ratio of an aspect ratio at least at one end part of the discontinuous reinforcing fiber aggregate (the width of the discontinuous reinforcing fiber aggregate/the thickness of the discontinuous reinforcing fiber aggregate) relative to an aspect ratio at a narrowest part at which the width of the discontinuous reinforcing fiber aggregate is smallest in the longitudinal direction when projected two-dimensionally, the aspect ratio at one end part/ the aspect ratio at a narrowest part, is 1.5 or more and less than 50, are contained at least at 5% by weight or more in the discontinuous reinforcing fibers. In order to exhibit high mechanical properties and flowability, in the fan-shaped discontinuous reinforcing fiber aggregate (A), the ratio of the aspect ratio at least at one end part relative to the aspect ratio at a narrowest part, the aspect ratio at one end part/the aspect ratio at a narrowest part, is more preferably 2 or more and less than 50, further preferably 2.5 or more and less than 50, and still further preferably 3 or more and less than 50. As the aspect ratio of at least at one end part becomes larger than the aspect ratio of the narrowest part, the surface area of the reinforcing fibers at the end part of the fan-shaped discontinuous reinforcing fiber aggregate (A) increases, and when a load is applied, a stress concentrated to the end part is relieved, and therefore, the strength of the reinforcing fiber composite material is liable to be exhibited. In addition, since the width and the thickness of the reinforcing fibers relative to the longitudinal direction (fiber lengthwise direction) of the fiber aggregate are defined so that the fibers are oriented in more multiple directions, as compared with a columnar shape with a rectangular or elliptical cross-sectional shape relative to the longitudinal direction of the reinforcing fiber aggregate, the obtained reinforcing fiber composite material is liable to become more two-dimensional isotropic.

Further, as described later in detail, since the discontinuous reinforcing fiber aggregate is integrated by an entanglement of the reinforcing fibers with each other or by a sizing agent adhering to the reinforcing fibers, or the like, at a region except at least one end part, at the time of flow molding, in particular, at the start of flow, the flowing is started at an unit of the aggregate, the discontinuous reinforcing fiber aggregate is likely to flow while being split and opened from a trigger point at an end part formed because at least the end part is partially split and opened, an excellent flowability is exhibited without obstructing flowing of a matrix resin. If the ratio of the aspect ratio of at least one end part to the aspect ratio of a narrowest part (aspect ratio of one end part/ aspect ratio of narrowest part) is less than 1.5, stress concentration is liable to occur at the end part of the discontinuous reinforcing fiber aggregate, and the effect for exhibiting strength is insufficient. If it is 50 or more, the entanglement between the fibers tends to be loosened, the formation of the discontinuous reinforcing fiber aggregate cannot be obtained, leading to an increase in number of contacts between the fibers, and leading to deterioration of the flowability.

The content of the fan-shaped discontinuous reinforcing fiber aggregate (A) contained in the reinforcing fiber composite material is preferably at least 5% by weight or more and 100% by weight or less relative to the total amount of the discontinuous reinforcing fibers contained in the reinforcing fiber composite material, more preferably 10% by weight or more and 100% by weight or less, and further preferably 20% by weight or more and 100% by weight or less. If less than 5% by weight, the effect for exhibiting high flowability and high strength due to the fan-shaped discontinuous reinforcing fiber aggregate (A) is insufficient. The fan-shaped discontinuous reinforcing fiber aggregate (A) according to the present invention is not a chopped strand adhered with single fibers such as fluffs to a chopped strand or a chopped strand widened and split, but a discontinuous reinforcing fiber aggregate the end part of which is intentionally split and widened.

In order to exhibit higher strength and flowability, it is preferred that at least one end part of the fan-shaped discontinuous reinforcing fiber aggregate (A) is branched into two or more parts when projecting the fan-shaped discontinuous reinforcing fiber aggregate (A) on a two-dimensional plane. In such a condition where at least one end part of the fan-shaped discontinuous reinforcing fiber aggregate (A) is branched into two or more parts, since the surface area occupied by the reinforcing fibers at the end part increases and a stress concentrated to the end part of the fan-shaped discontinuous reinforcing fiber aggregate (A) is relieved, a strength of the reinforcing fiber composite material is exhibited. Further, in the condition where at least one end part is branched, the obtained reinforcing fiber composite material becomes more two-dimensionally isotropic. Where, in the present invention, in case where at least one end part of the fan-shaped discontinuous reinforcing fiber aggregate (A) is branched into two or more parts, the width of the end part when calculating the aspect ratio of the end part is defined by the total width of the end part including the spaces between the branched parts.

In order to exhibit a higher strength, it is preferred that the fan-shaped discontinuous reinforcing fiber aggregate (A) has an aspect ratio of at least one end part of more than 30 and less than 1,000. More preferably, the aspect ratio of at least one end part of the discontinuous reinforcing fiber aggregate is more than 30 and less than 800, and further preferably, more than 40 and less than 600. If the aspect ratio of at least one end part of the discontinuous reinforcing fiber aggregate is 30 or less, a stress concentration tends to occur at the end part of the discontinuous reinforcing fiber aggregate, and the strength exhibition effect is insufficient, and if 1,000 or more, the entanglement between the fibers tends to be easily loosened, the form of the fan-shaped discontinuous reinforcing fiber aggregate (A) cannot be obtained, leading to an increase in the number of contacts between the fibers, and leading to a deterioration of the flowability.

Further, in order to exhibit a high strength more reliably, it is preferred that with respect to the width of at least one end part and the width of the narrowest part of the fan-shaped discontinuous reinforcing fiber aggregate (A) in the longitudinal direction when projecting the fan-shaped discontinuous reinforcing fiber aggregate (A) two-dimensionally, the one end part width/the narrowest part width is in a range of 1.5 or more and less than 50. More preferably it is 1.8 or more and less than 50, and further preferably 2 or more and less than 50. If the aggregate width of at least one end part of the fan-shaped discontinuous reinforcing fiber aggregate (A) relative to the aggregate width at the narrowest part, the one end part width/the narrowest part width is less than 1.5, a stress concentration tends to occur at the end part of the fan-shaped continuous reinforcing fiber aggregate (A), the strength exhibition effect is insufficient, and if 50 or more, the entanglement between the fibers tends to be easily loosened, the form of the fan-shaped discontinuous reinforcing fiber aggregate (A) cannot be obtained, leading to an increase in the number of contacts between the fibers, and leading to a deterioration of the flowability.

Moreover, in order to exhibit a high strength reliably, it is preferred that with respect to a thickness of at least one end part and a thickness of the narrowest part of the fan-shaped discontinuous reinforcing fiber aggregate (A), the one end part thickness/the narrowest part thickness is in a range of 0.01 or more and less than 0.9, more preferably 0.02 or more and less than 0.85, and further preferably 0.03 or more and less than 0.8. If the thickness of at least one side end part of the fan-shaped discontinuous reinforcing fiber aggregate (A) relative to the thickness of the narrowest part, the thickness of the one side end part/the thickness of the narrowest part is less than 0.01, the entanglement between the fibers tends to be easily loosened, the form of the fan-shaped discontinuous reinforcing fiber aggregate (A) cannot be obtained, leading to an increase in the number of contacts between the fibers, and leading to a deterioration of the flowability. If the thickness of the one side end part/the thickness of the narrowest part is 0.9 or more, the widening of the end part of the fan-shaped discontinuous reinforcing fiber aggregate (A) is insufficient, and it hardly contributes to the strength exhibition and the strength is inferior.

Furthermore, in order to satisfy both the strength and the flowability at a good balance, it is preferred that a widening angle, calculated from a width of at least one end part and a width of the narrowest part of the fan-shaped discontinuous reinforcing fiber aggregate (A) when projecting the fan-shaped discontinuous reinforcing fiber aggregate (A) two-dimensionally, is in a range of more than 5° and less than 90°. Here,

$$\text{widening angle} = \tan^{-1}\{(Mn - m) / 2 / Ln\}$$

(L indicates a distance from the narrowest part to the one end part, "n" indicates a position of any one end part of the discontinuous reinforcing fiber aggregate, and n = 1 or 2), namely,

$$\text{widening angle} = \tan^{-1}\{(\text{width of one end part} - \text{width of narrowest part}) / 2 / \text{distance between one end part and narrowest part}\}$$

It is more preferably more than 8° and less than 85°, further preferably more than 10° and less than 80°. If the widening angle is 5° or less, a stress concentration tends to occur at the end part of the discontinuous reinforcing fiber aggregate, and the strength exhibition effect is insufficient, and if it is 90° or more, the entanglement between the fibers tends to be easily loosened, the form of the fan-shaped discontinuous reinforcing fiber aggregate (A) cannot be obtained, leading to an increase in the number of contacts between the fibers, and the flowability deteriorates.

Further, in order to satisfy the strength and the flowability at a good balance, it is preferred that a number average fiber length of the discontinuous reinforcing fibers is in a range of 5 mm or more and less than 100 mm. If the number average fiber length is less than 5 mm, when widening the end part of the discontinuous reinforcing fiber aggregate, the entanglement between the fibers tends to be easily loosened, the reinforcing fibers are dispersed sufficiently, leading to an increase in the number of contacts between the fibers, and leading to a deterioration of the flowability. If the number average fiber length exceeds 100 mm, the number of contact points between the fibers of the reinforcing fibers increases, and leading to a deterioration of the flowability.

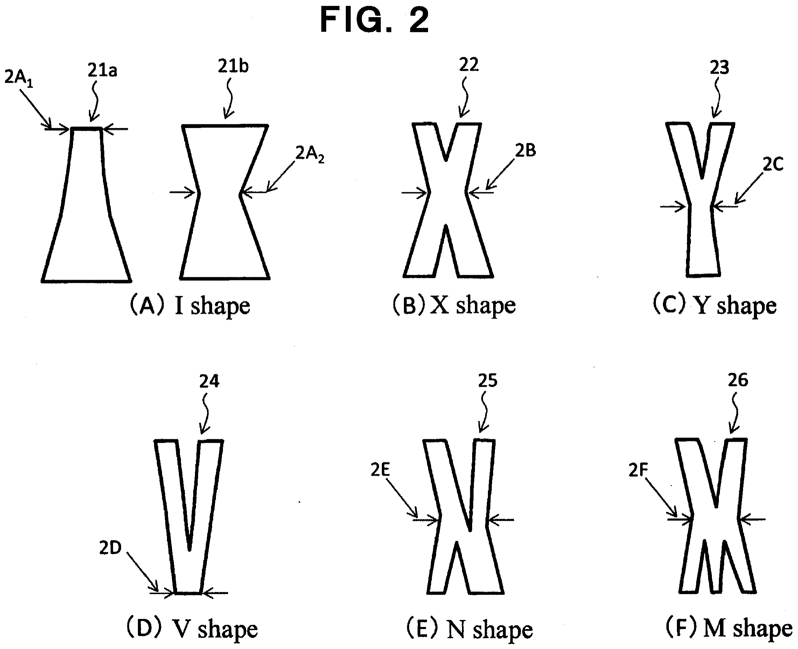

Further, in order to securely satisfy both the strength and the flowability at a good balance, it is preferred that the shape of the fan-shaped discontinuous reinforcing fiber aggregate (A) when two-dimensionally projected is any one selected from the group of I, X, Y, V, N, M shapes and a combination thereof, as shown in Fig. 2 described later. By the condition where the fan-shaped discontinuous reinforcing fiber aggregate (A) has any one of these shapes, because the surface area of the reinforcing fibers at the end part more increases and the stress concentrated at the end part of the discontinuous reinforcing fibers is relieved, the strength of the reinforcing fiber composite material is exhibited, and in addition, because the flowing is performed at aggregate units at the time of flow molding, particularly at the time of starting the flowing, an excellent flowability is exhibited.

Furthermore, in order to satisfy both high strength and flowability at a good balance more reliably, it is preferred that the ratio of the aspect ratio of each end part to the aspect ratio of the narrowest part of the fan-shaped discontinuous reinforcing fiber aggregate (A) (end part aspect ratio/narrowest part aspect ratio) is in a range of 1.5 or more and less than 50 at both end parts. In order to exhibit the strength more reliably, more preferably the end part aspect ratio/the narrowest part aspect ratio is 1.8 or more and less than 50 at both end parts, and further preferably 2 or more and less than 50.

Further, in order to reliably exhibit the strength, it is preferred that the end part (in particular, each end part) of the fan-shaped discontinuous reinforcing fiber aggregate (A) is cut with an angle $\theta$ of 2° to 30° relative to the longitudinal direction (fiber orientation direction) of the discontinuous reinforcing fiber aggregate. By cutting with an angle $\theta$, the surface area of the reinforcing fibers at the end part of the fan-shaped discontinuous reinforcing fiber aggregate (A) is increased, and by combining with the widening and splitting of the end part of the reinforcing fiber aggregate described later, which exhibits a further synergistic effect, the stress concentrating on the end part of the discontinuous reinforcing fibers is relieved, and the strength of the reinforcing fiber composite material is exhibited.

In the reinforcing fiber composite material according to the present invention, as the discontinuous reinforcing fibers, although it is possible to use any reinforcing fibers used for molding a fiber reinforcing composite material, in particular, the present invention is suitable for a case where the discontinuous reinforcing fibers comprise carbon fibers and the carbon fibers are contained as the discontinuous reinforcing fibers.

Effect according to the Invention

Thus, As described above, in the reinforcing fiber composite material according to the present invention, excellent flowability during molding, high mechanical properties of a molded article, and two-dimensional isotropy can be all achieved at a good balance, and in addition, an excellent reinforcing fiber composite material also small in fluctuation of the mechanical properties can be provided.

Brief explanation of the drawings

[Fig. 1] Fig. 1 (A) is a perspective view showing an example of a fan-shaped discontinuous reinforcing fiber aggregate in the present invention, Fig. 1 (B) is a two-dimensional projection to a (B) direction (to a horizontal plane) of the fan-shaped discontinuous reinforcing fiber aggregate depicted in Fig. 1 (A), and Fig. 1 (C) is a two-dimensional projection to a (C) direction (to a vertical plane) of the fan-shaped discontinuous reinforcing fiber aggregate depicted in Fig. 1 (A)

[Fig. 2] Fig. 2 shows schematic two-dimensional projections showing formation examples of fan-shaped discontinuous reinforcing fiber aggregates in the present invention.

[Fig. 3] Fig. 3 is a schematic diagram showing an example of an apparatus for manufacturing a discontinuous reinforcing fiber sheet used in the present invention.

[Fig. 4] Fig. 4 is a schematic two-dimensional projection showing an example in that an end part of a discontinuous reinforcing fiber aggregate in the present invention is cut with an angle $\theta$.

[Fig. 5] Fig. 5 is a schematic two-dimensional projection showing an example of measurement positions of an end part and a narrowest part of a discontinuous reinforcing fiber aggregate in the present invention.

Embodiments for carrying out the Invention

Hereinafter, the present invention will be explained in detail together with Examples and comparative Examples.
First, in the present invention, the reinforcing fiber composite material is composed of discontinuous reinforcing fibers and a matrix resin. The discontinuous reinforcing fibers are characterized by containing a in that it includes a fan-shaped discontinuous reinforcing fiber aggregate (A) with a predetermined shape as shown at least in Fig. 1 at a predetermined rate.

The reinforcing fiber composite material according to the present invention is characterized in that it comprises discontinuous reinforcing fibers containing at least discontinuous reinforcing fiber aggregates and a matrix resin, wherein a fan-shaped discontinuous reinforcing fiber aggregate (A) is contained at an amount of 5% by weight or more in the discontinuous reinforcing fibers, and wherein the fan-shaped discontinuous reinforcing fiber aggregate (A) has a fan-like section in which an aspect ratio at least at one end part of the discontinuous reinforcing fiber aggregate (a width of the discontinuous reinforcing fiber aggregate Mn/a thickness of the discontinuous reinforcing fiber aggregate Hn, here, "n" indicates a position of any one end part of the discontinuous reinforcing fiber aggregate, and n = 1 or 2) is 1.5 times or more relative to an aspect ratio (m/h) at a narrowest part at which a width of the discontinuous reinforcing fiber aggregate in a direction across an orientation direction of the discontinuous reinforcing fibers is smallest when the discontinuous reinforcing fiber aggregate is projected two-dimensionally. Here, it is preferred that the aspect ratio at one end part/the aspect ratio at the narrowest part is 1.5 or more and less than 50. As the aspect ratio of at least one end part becomes 1.5 times or more larger than the aspect ratio of the narrowest part, the surface area of the reinforcing fibers at the end part of the fan-shaped discontinuous reinforcing fiber aggregate (A) increases, because a stress concentrated to the end part of the discontinuous reinforcing fiber aggregate, which becomes a trigger point of breakage when made into a reinforcing fiber composite material and when applied with a load, is relieved, a strength of the reinforcing fiber composite material is easily exhibited. Further, since with respect to the width and the thickness of the reinforcing fibers relative to the longitudinal direction (fiber lengthwise direction) of the reinforcing fiber aggregate, the fibers are oriented in more multiple directions, as compared with a case of a columnar shape having a cross-sectional shape relative to the longitudinal direction which is a constant shape such as a rectangular or elliptical cross-sectional shape, the obtained reinforcing fiber composite material is liable to become more two-dimensional isotropic. Further, by the condition of the aspect ratio less than 50, the discontinuous reinforcing fiber aggregate is easily integrated at a region except at least one end part by the entanglement of the reinforcing fibers with each other and the sizing agent adhered to the reinforcing fibers or the like.

Furthermore, at the time of flow molding, concretely, at the time when the flowing is started at an unit of the discontinuous reinforcing fiber aggregate, by a condition where at least one end part is partially split and opened, this end part becomes a trigger and the fan-shaped discontinuous reinforcing fiber aggregate (A) continues to flow while being split and opened, an excellent flowability is exhibited without obstructing flowing of a matrix resin. Besides, even with a complicated shape such as ribs, the discontinuous fibers having been opened and split from the fan-shaped discontinuous reinforcing fiber aggregate (A) during flowing are likely to flow along the complicated shape, and an excellent moldability is exhibited. In the fan-shaped discontinuous reinforcing fiber aggregate (A) having a ratio of an aspect ratio of at least one end part to an aspect ratio of the narrowest part, the aspect ratio at one end part/the aspect ratio at the narrowest part is more preferably 2 or more and less than 50, further preferably 2.5 or more and less than 50, and still further preferably 3 or more and less than 50.

Here, the aspect ratio of the fan-shaped discontinuous reinforcing fiber aggregate (A) will be further explained. As shown in Fig. 1 (A), a fan-shaped discontinuous reinforcing fiber aggregate (A) 1 is placed on a horizontal plane H, and a two-dimensional projection, projected with it vertically downward (direction of arrow (B) in the figure) to the horizontal plane H, is Fig. 1 (B). The width of each end part 3, 4 of the discontinuous reinforcing fiber aggregate (A), measured in the two-dimensional projection view 5 on the horizontal plane shown in Fig. 1 (B), represented as Mn (n = 1, 2), and the width of a narrowest part 2 is represented as "m". Here, "the narrowest part where the discontinuous reinforcing fiber aggregate width across the orientation direction of the discontinuous reinforcing fibers is narrowest" is typically a thickness of a discontinuous reinforcing fiber aggregate the end part of which is not fan-shaped, namely, it corresponds to a width perpendicular to the fiber orientation direction of the discontinuous reinforcing fiber aggregate. In cases of Fig. 2 (A) to (F) described later, the shortest distance between the left and right end parts of the discontinuous reinforcing fiber aggregate across the fiber orientation direction corresponding to the width of the discontinuous reinforcing fiber aggregate can be referred to as the narrowest part. Where, $L_1$ and $L_2$ in Fig. 1 (B) indicate distances from the narrowest part 2 to the respective end parts.

Further, Fig. 1 (C) shows a two-dimensional projection projected in the direction toward the vertical plane P (the direction of the arrow (C) in the figure) in Fig. 1 (A). The thickness of each end part 3, 4 of the discontinuous reinforcing fiber aggregate (A), measured in the two-dimensional projection view 6 on the vertical plane shown in this Fig. 1 (C), is represented as Hn (n = 1, 2), and the thickness of the narrowest part 2 is represented as "h".

It is preferred that the fan-shaped discontinuous reinforcing fiber aggregates (A) contained in the reinforcing fiber composite material is at least 5% by weight or more and 100% by weight or less relative to the total amount of the discontinuous reinforcing fibers contained in the reinforcing fiber composite material. By containing the fan-shaped discontinuous reinforcing fiber aggregates (A) at least at 5% by weight or more relative to the total amount of the discontinuous reinforcing fibers, high flowability and high strength due to the fan-shaped discontinuous reinforcing fiber aggregates (A) are exhibited sufficiently. The content of the fan-shaped discontinuous reinforcing fiber aggregates (A) is more preferably 10% by weight or more and 100% by weight or less, and further preferably 20% by weight or more and 100% by weight or less.

In addition to the fan-shaped discontinuous reinforcing fiber aggregates (A), the discontinuous reinforcing fibers may contain discontinuous reinforcing fibers which are formed when a discontinuous reinforcing fiber sheet is made and opened up to a single fiber level, chopped strands formed by cutting a strand as it is, split chopped strands each formed by being divided with a chopped strand in the width direction, chopped strands each of which is divided and widened at least at one end part but does not satisfy the aggregate form, widened chopped strands each in which the whole of the chopped strand is widened, widened and divided chopped strands each in which the whole of the chopped strand is widened and divided, etc.

Further, at least one end part of the fan-shaped discontinuous reinforcing fiber aggregate (A) may be branched into two or more parts when projected on a two-dimensional plane. By the condition where at least one end part of the fan-shaped discontinuous reinforcing fiber aggregate (A) is branched into two or more parts, since the surface area occupied by the reinforcing fibers at the end part increases and a stress concentrated to the end part of the fan-shaped discontinuous reinforcing fiber aggregate (A) is relieved, the strength of the reinforcing fiber composite material tends to be more exhibited. Further, in the condition where at least one end part is branched into two or more parts, because the reinforcing fibers forming the fan-shaped discontinuous reinforcing fiber aggregate (A) are oriented in more multiple directions, the obtained reinforcing fiber composite material becomes more two-dimensional isotropic, and therefore, it is preferable.

The aspect ratio of at least one end part of the fan-shaped discontinuous reinforcing fiber aggregate (A) is preferably more than 30 and less than 1000. By the condition where the aspect ratio of at least one end part exceeds 30, the surface area of the reinforcing fibers at the end part is increased and the strength of the reinforcing fiber composite material is liable to be easily exhibited. Further, by the condition where the aspect ratio of at least one end part is less than 1000, the fan-shaped discontinuous reinforcing fiber aggregates (A) start to flow at aggregate units at the time of flow molding, particularly at the time of starting the flowing, and an excellent flowability is exhibited. The aspect ratio of at least one end part is more preferably more than 30 and less than 800, further preferably more than 40 and less than 600.

In the above-described fan-shaped discontinuous reinforcing fiber aggregate (A), it is preferred that with respect to the width of at least one end part when projected two-dimensionally ($M_1$ or $M_2$ in Fig. 1 (B)) and the width of the narrowest part (m) in the longitudinal direction of the fan-shaped discontinuous reinforcing fiber aggregate (A), the width of one end part/the width of the narrowest part is 1.5 or more and less than 50. By the condition where the width of one end part/the width of the narrowest part is 1.5 or more, the surface area of the reinforcing fibers at the end part is further increased, and the strength of the reinforcing fiber composite material is exhibited more easily. Further, by the condition where the width of one end part/the width of the narrowest part is less than 50, the fan-shaped discontinuous reinforcing fiber aggregates (A) start to flow at aggregate units at the time of flow molding, particularly at the time of starting the flowing, and an excellent flowability is exhibited. The width of one end part/the width of the narrowest part is more preferably 1.8 or more and less than 50, and further preferably 2 or more and less than 50.

In the above-described fan-shaped discontinuous reinforcing fiber aggregate (A), it is preferred that with respect to the thickness of at least one end part ($H_1$ or $H_2$ in Fig. 1 (B)) and the thickness of the narrowest part (h), the thickness of one end part/the thickness of the narrowest part is 0.01 or more and less than 0.9. By the condition where the thickness of one end part/the thickness of the narrowest part is less than 0.9, the surface area of the reinforcing fibers at the end part of the fan-shaped discontinuous reinforcing fiber aggregate (A) increases, a stress concentrated to the end part of the discontinuous reinforcing fibers, which becomes a trigger point of breakage when made into a reinforcing fiber composite material, is relieved, and a strength of the reinforcing fiber composite material is easily exhibited. Further, by the condition where the thickness of one end part/the thickness of the narrowest part is 0.01 or more, the fan-shaped discontinuous reinforcing fiber aggregates (A) start to flow at aggregate units at the time of flow molding, particularly at the time of starting the flowing, and an excellent flowability is exhibited. The thickness of one end part/the thickness of the narrowest part is more preferably 0.02 or more and less than 0.85, and further preferably 0.03 or more and less than 0.8.

It is preferred that the above-described fan-shaped discontinuous fiber aggregate (A) has a widening angle, calculated from a width of at least one end part and a width of the narrowest part, of more than 5° and less than 90°. Here,

$$\text{widening angle} = \tan^{-1}\{(Mn - m) / 2 / Ln\}$$

(L indicates a distance from the narrowest part to the one end part, "n" indicates a position of any one end part of the discontinuous reinforcing fiber aggregate, and n = 1 or 2).

By the condition where the widening angle exceeds 5°, the surface area of the reinforcing fibers at the end part increases, the strength of the reinforcing fiber composite material is easily exhibited, and in addition, because the discontinuous reinforcing fibers are oriented in a wider range, the obtained reinforcing fiber composite material becomes more two-dimensionally isotropic, and such a condition is preferable. By the condition where the widening angle is less than 90°, the fan-shaped discontinuous fiber aggregate (A) maintains the aggregate shape and exhibits excellent flowability. It is more preferably more than 8° and less than 85°, further preferably more than 10° and less than 80°.

As a form of the above-described fan-shaped discontinuous reinforcing fiber aggregate (A), as the shapes when projected two-dimensionally are exemplified in Fig. 2 (A) to (F), I shapes 21a, 21b, X shape 22, Y shape 23, V shape 24, N shape 25, M shape 26 and/or a combination thereof are preferred. The I, X, Y, V, N and M shapes shown in Fig. 2 (A) to (F) include formations in which an end part is divided further finely, for example, in case of X shape, a formation in which one end part or each end part is divided into three or more parts. By the condition where the fan-shaped discontinuous reinforcing fiber aggregate (A) is formed as these shapes, the surface area of the reinforcing fibers at the end part more increases, because a stress concentrated to the end part of the discontinuous reinforcing fibers, which becomes a trigger point of breakage when made into a reinforcing fiber composite material, is relieved, the strength of the reinforcing fiber composite material is exhibited, and in addition, the fan-shaped discontinuous reinforcing fiber aggregates (A) flow at aggregate units at the time of flow molding, particularly at the time of starting the flowing, and therefore, an excellent flowability is exhibited. Where, 2A, 2B, 2C, 2D, 2E and 2F in Fig. 2 (A) to (F) show the narrowest portions in the respective embodiments.

In the above-described fan-shaped discontinuous reinforcing fiber aggregate (A), it is preferred that with respect to the aspect ratio of the end part and the aspect ratio of the narrowest part, the aspect ratio of the end part/the aspect ratio of the narrowest part is 1.5 or more and less than 50 at each end part. By the condition where the aspect ratio of the end part/the aspect ratio of the narrowest part is 1.5 or more, because a stress concentrated to the end part of the discontinuous reinforcing fibers, which becomes a trigger point of breakage when made into a reinforcing fiber composite material, is relieved, the reinforcing fiber composite material exhibits an excellent strength. By the condition where the aspect ratio of the end part/the aspect ratio of the narrowest part is less than 50 at each end part, the fan-shaped discontinuous fiber aggregate (A) maintains the aggregate shape before flow molding, and at the time of flow molding, particularly at the start of the flowing, the fan-shaped discontinuous reinforcing fiber aggregates (A) starts to flow at aggregate units, and together with the flowing, both end parts become a starting point for the operation in which the fan-shaped discontinuous reinforcing fiber aggregate (A) is opened and split, while this operation is performed, an easy flowing and excellent flowability can be exhibited. The aspect ratio of the end part/the aspect ratio of the narrowest part is more preferably 1.8 or more and less than 50 at both end parts, and further preferably 2 or more and less than 50.

Here, the reinforcing fibers used to obtain the reinforcing fiber composite material in the present invention are not particularly limited, and although carbon fibers, glass fibers, aramide fibers and the like can be used, in order to achieve a high strength, it is preferred to contain carbon fibers. Although the carbon fibers are not particularly limited, high strength and high elastic modulus carbon fibers can be used, and one type or two or more types may be used together. Among them, carbon fibers such as polyacrylonitrile (PAN) based type, pitch based type, rayon based type and the like can be exemplified. From the viewpoint of the balance between the strength of the obtained molded article and the elastic modulus thereof, PAN based carbon fibers are preferable. The density of the carbon fibers is preferably 1.65 to 1.95 $g/cm^3$, and more preferably 1.7 to 1.85 $g/cm^3$. If the density is too great, the obtained carbon fiber composite material is inferior in light weight performance, and if it is too small, the obtained carbon fiber composite material may be lowered in mechanical properties.

Further, the reinforcing fibers used also for obtaining the reinforcing fiber composite material according to the present invention is preferably a reinforcing fiber strand formed by converging single fibers, from the viewpoint of productivity, and a reinforcing fiber strand having a large number of single fibers in the reinforcing fiber strand is preferred. The number of single fibers when formed as a reinforcing fiber strand can be used within a range of 1,000 to 100,000, and in particular, it is used preferably within a range of 10,000 to 70,000. The reinforcing fibers may be used, ss needed, in a manner by cutting split reinforcing fiber strands prepared by dividing a reinforcing fiber strand into a desired number of strands by using a strand splitting slitter or the like, at a predetermined length. By dividing the strand into a desired number of strands, the uniformity when made into a reinforcing fiber composite material is improved, as compared with the untreated strand, and because the mechanical properties are excellent, it can be exemplified as a preferable embodiment.

The flexural stiffness of a single fiber of the reinforcing fibers is preferably in a range of 1 x $10^{-11}$ to 3.5 x $10^{-11}$

Pa·m$^4$, and more preferably in a range of 2 x 10$^{-11}$ to 3 x 10$^{-11}$ Pa·m$^4$. By the condition where the single fiber flexural stiffness is within the above-described range, in a process for manufacturing a reinforcing fiber nonwoven fabric sheet described later, it is possible to stabilize the quality of the obtained reinforcing fiber nonwoven fabric sheet.

Further, it is preferred that the reinforcing fiber strands used for obtaining the reinforcing fiber composite material are surface treated for the purpose of improving the adhesiveness with a matrix resin or the like. As the method of the surface treatment, there are electrolytic treatment, ozone treatment, ultraviolet treatment, etc. Further, a sizing agent may be provided for the purpose of preventing fluffing of the reinforcing fiber strands, improving convergence of the reinforcing fiber strands, improving adhesiveness with the matrix resin, or the like. Although the sizing agent is not particularly limited, a compound having a functional group such as an epoxy group, a urethane group, an amino group, a carboxylic group or the like can be used, and these may be used in a manner of one kind or two or more kinds in combination.

Here, the sizing treatment means a treatment method for drying a water-wetted reinforcing fiber strand having a moisture content of approximately 20 to 80% by weight, wetted in water at a surface treatment step, a water washing step and the like, and thereafter, adhering a sizing agent-containing liquid (sizing liquid) thereto.

Although the method of providing the sizing agent is not particularly limited. for example, there are a method of immersing in a sizing solution via a roller, a method of contacting a roller adhered with a sizing solution, a method of spraying a sizing solution in a mist form, etc. Further, although any of a batch system and a continuous system may be available, a continuous system is preferred which is good in productivity and can reduce fluctuation. In this case, it is preferred to control the concentration and the temperature of the sizing solution, and the yarn tension, and the like so that the adhering amount of the sizing agent active ingredient to the reinforcing fiber strands becomes within an appropriate range and it adheres uniformly. Furthermore, it is more preferable to vibrate the reinforcing fiber strand with ultrasonic waves at the time of providing the sizing agent.

Although the drying temperature and the drying time can be adjusted depending upon the adhering amount of the compound, the drying temperature is preferably 150°C or more and 350°C or less, and more preferably 180°C or more and 250°C or less, from the viewpoint of shortening the time required for complete removal and drying of the solvent used for providing the sizing agent, while preventing thermal deterioration of the sizing agent, preventing the fiber strand from hardening and deteriorating spreadability of the bundle.

The amount of sizing agent provided is preferably 0.01% by mass or more and 10% by mass or less relative to the mass of the reinforcing fiber strand only, more preferably 0.05% by mass or more and 5% by mass or less, and further preferably 0.1% by mass or more and 5% by mass or less. In case of less than 0.01% by mass, the adhesiveness improving effect is difficult to appear. In case of more than 10% by mass, there is a possibility to reduce the properties of a molded article.

In the present invention, as the matrix resin used for the reinforcing fiber composite material, a thermoplastic resin and/or a thermosetting resin is used. The thermoplastic resin is not particularly limited, and can be appropriately selected within a range that does not greatly reduce the mechanical properties as a molded article. If exemplified, polyolefin-based resins such as a polyethylene resin and a polypropylene resin, polyamide-based resins such as a nylon 6 resin and a nylon 6,6 resin, polyester-based resins such as a polyethylene terephthalate resin and a polybutylene terephthalate resin, a polyphenylene sulfide resin, a polyetherketone resin, a polyethersulfone resin, an aromatic polyamide resin, etc. can be used. Among them, any one of a polyamide resin, a polypropylene resin and a polyphenylene sulfide resin is preferable.

The thermosetting resin is also not particularly limited and can be appropriately selected within a range that does not greatly reduce the mechanical properties as a molded article. If exemplified, an epoxy resin, an unsaturated polyester resin, a vinyl ester resin, a phenolic resin, an epoxy acrylate resin, a urethane acrylate resin, a phenoxy resin, an alkyd resin, a urethane resin, a maleimide resin, a cyanate resin, etc. can be used. Among them, any one of an epoxy resin, a unsaturated polyester resin, a vinyl ester resin and a phenolic resin, or a mixture thereof, is preferable. When a mixture of thermosetting resins is used, it is preferable that the thermosetting resins to be mixed have compatibility or have high affinity.

Although the viscosity of the thermosetting resin used in the present invention is not particularly limited, the resin viscosity at a room temperature (25°C) is preferably 100 to 100,000 mPa·s.

For the matrix resin used in the present invention, various additives can be added to the thermoplastic resin or/and the thermosetting resin depending upon the application as long as the object of the present invention can be achieved. For example, a material may be added which is selected from the group consisting of fillers such as mica, talc, kaolin, hydrotalcite, sericite, bentonite, zonotolite, sepiolite, smectite, montmorillonite, wollastonite, silica, calcium carbonate, glass beads, glass flakes, glass microballoons, clay, molybdenum disulfide, titanium oxide, zinc oxide, antimony oxide, calcium polyphosphate, graphite, barium sulfate, magnesium sulfate, zinc borate, calcium borate, aluminum borate whisker, potassium titanate whisker and polymer compounds, conductivity-imparting materials such as metal- or metal oxide-based materials, carbon black and graphite powder, halogen-based flame retardants such as brominated resins, antimony-based flame retardants such as antimony trioxide and antimony pentoxide, phosphorus-based flame retardants such as ammonium polyphosphate, aromatic phosphate and red phosphorus, organic acid metal salt flame retardants such as boric acid metal salts, metal carboxylates salts and aromatic sulfonimide metal salts, inorganic-based flame retardants such as zinc borate, zinc, zinc oxide and zirconium compounds, nitrogen-based flame retardants such as cyanuric acid, isocyanuric acid, melamine, melamine cyanurate, melamine phosphate and nitrogenated guanidine, a fluorine-based flame retardant such as PTFE, a silicone-based flame retardant such as polyorganosiloxane, a metal hydroxide-based flame retardant such as aluminum hydroxide or magnesium hydroxide, and other flame retardants, auxiliary flame retardants such as cadmium oxide, zinc oxide, cuprous oxide, cupric oxide, ferrous oxide, ferric oxide, cobalt oxide, manganese oxide, molybdenum oxide, tin oxide and titanium oxide, pigments, dyes, lubricants, release agents, compatibilizing agents, dispersing agents, crystal nucleating agents such as mica, talc and kaolin, plasticizers such as phosphate esters, thermal stabilizers, antioxidants, coloring inhibitors, ultraviolet absorbers, flowability improvers, foaming agents, antibacterial agents, vibration damping agents, deodorant agents, sliding property modifiers, an antistatic agent such as polyetherester amide, etc.

Further, in case where a thermosetting resin is used as the matrix resin, as the aforementioned thermoplastic resin, or other additives such as low shrinking agent, can be contained within a range at that the object of the present invention can be achieved.

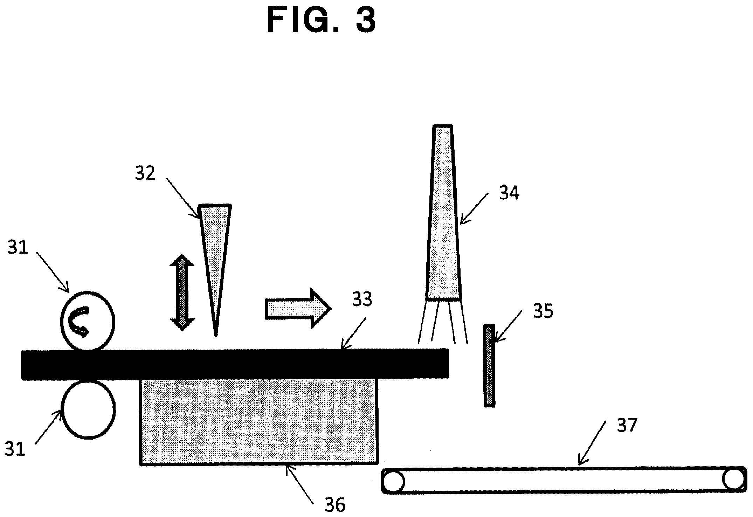

The process for obtaining the discontinuous reinforcing fiber sheet is not particularly limited as long as the object of the present invention can be achieved. For example, as shown in Fig. 3, a process having conveying rolls 31, 31 for conveying the reinforcing fiber strands 33, a cutter 32 and a cutter base 36 for cutting the reinforcing fiber strands into predetermined dimensions, an air head 34 for performing an end part treatment in that at least one end part is widened and/or split, a wall 35 for the end part widening and/or splitting, and a conveyer 37 which accumulates discontinuous reinforcing fibers in a sheet form, is exemplified as a preferable example.

Here, the conveying roll 31 is not particularly limited as long as the object of the present invention can be achieved, and a mechanism for nipping and conveying between the rolls is exemplified. In this case, it is exemplified as a preferable example that one roll is made into a metal roll and the other roll is made into a rubber roll. The angle at which the reinforcing fiber strand is conveyed to the cutter 32 described later is not particularly limited as long as it does not obstruct the subject matter of the present invention, and when the direction in which the reinforcing fiber strand is conveyed is referred to as 0° direction, the direction of the blade for cutting may be an angle other than 90°. In case of providing an angle other than 90°, an angle of 2° to 30° is exemplified as a preferable example. By cutting with an angle other than 90°, the surface area of the reinforcing fibers at the end surface at the end part of the strand is increased, and by combining with the widening and splitting of the end part of the reinforcing fiber aggregate described later, by a further synergistic effect, the stress concentrating on the end part of the discontinuous reinforcing fiber aggregate is relieved, and the strength of the reinforcing fiber composite material is exhibited, and therefore, it can be exemplified as a more preferable example.

The cutter 32 is not particularly restricted as long as it does not obstruct the subject matter of the present invention, and a guillotine blade type or a rotary type cutter is exemplified. As aforementioned, the direction of the blade for cutting relative to the direction in which the reinforcing fiber strand is conveyed is not particularly restricted, it may be provided with an angle similarly to the mechanism for conveying the reinforcing fiber strand, and in case of a rotary type cutter, the blades may be arranged in a spiral form.

Further, in order to satisfy the strength and flowability at a good balance, it is preferred that the number average fiber length of the discontinuous reinforcing fibers is 5 mm or more and less than 100 mm. If the number average fiber length is less than 5 mm, the entanglement between fibers tends to be easily loosened when widening the end part of the discontinuous reinforcing fibers, the reinforcing fibers are sufficiently dispersed, thereby leading to an increase in the number of contact points between the fibers, and leading to deterioration in flowability. If the number average fiber length is 100 mm or more, the number of contact points between the fibers of the reinforcing fibers increases, thereby leading to deterioration in flowability.

The air head 34 is not particularly restricted as long as the object of the present invention can be achieved, and it is preferred that it is a mechanism for intermittently blowing air to one end part or a cutting position when cutting the fed reinforcing fiber strand. The intermittently blown air is not particularly restricted as long as it does not obstruct the subject matter of the present invention, and a pressure range of 0.01 MPa to 1 MPa is exemplified. If the pressure of the air is too weak, the end part of the discontinuous reinforcing fiber aggregate is not sufficiently widened and/or split, and if the air pressure is too strong, the entanglement between the reinforcing fibers tends to be easily loosened, and the fan-shaped discontinuous reinforcing fiber aggregate (A) cannot be obtained.

The wall 35 for the end part widening and/or splitting is not particularly restricted as long as the object of the present invention can be achieved, and may have a vibration function, and as the shape of the wall, a flat plate, a cylinder, an elliptic cylinder, a waving plate and the like are exemplified. As one of preferable methods of widening and/or splitting the end part of the discontinuous reinforcing fiber aggregate more reliably, a method is exemplified wherein, when cutting the fed reinforcing fiber strand, after hitting the tip portion of the reinforcing fiber strand against a vibrating wall, further air is intermittently blown against the end part having been hit to the wall, and the end part is widened and/or split.

Besides this, a method or the like is exemplified wherein, when cutting the fed reinforcing fiber strand at a predetermined dimension, the end part is physically widened and/or split by a slitter for end part splitting and the like.

The fan-shaped discontinuous reinforcing fiber aggregate (A) may be widened and/or split at both end parts. Also in this case, except the above-described methods, a method is exemplified wherein, before and/or simultaneously with cutting the reinforcing fiber strand, the cut portion is widened and/or split by air, a slitter, etc.

The conveyer 37 for accumulating the discontinuous reinforcing fibers into a sheet shape is not particularly restricted as long as it does not obstruct the subject matter of the present invention, and a method of dropping them onto a metal wire which freely travels on an XY plane can be exemplified. Here, a suction box may be installed under the metal wire, and the air used for widening and splitting the strand end part or the air used for scattering the discontinuous reinforcing fibers may be sucked, and the bulk of the sheet may be decreased. Further, a method can also be exemplified wherein, instead of the metal wire which freely travels on the XY plane, a composite mechanism in which the cutter 32 and the air head 34 are integrated is reciprocated in the X direction (strand running direction) is employed, and the metal wire is moved in the Y direction (direction perpendicular to the strand running direction).

In obtaining the discontinuous reinforcing fiber sheet, although the discontinuous reinforcing fiber sheet may be composed only of the discontinuous reinforcing fibers, it may contain a binder comprising a thermoplastic resin or/and a thermosetting resin in order to maintain a formation. It is preferred that the thermoplastic resin or/and the thermosetting resin used for the binder is made of the same resin as the matrix resin used for the reinforcing fiber composite material, a resin compatible with the matrix resin, or a resin having a high adhesiveness with the matrix resin.

In the present invention, when impregnating the matrix resin into the discontinuous reinforcing fiber sheet, any manner may be employed wherein a discontinuous reinforcing fiber sheet including a binder is prepared and the binder resin contained in the discontinuous reinforcing fiber sheet is used as a matrix resin as it is, or wherein a discontinuous reinforcing fiber sheet containing no binder is prepared and a matrix resin is impregnated at an arbitrary stage of manufacturing the reinforcing fiber composite material. Further, even in case where a discontinuous reinforcing fiber sheet containing a binder is used, it is also possible to impregnate the matrix resin at an arbitrary stage of manufacturing the reinforcing fiber composite material.

In manufacturing the reinforcing fiber composite material, the impregnation process for impregnating the matrix resin into the discontinuous reinforcing fiber sheet to prepare a reinforcing fiber composite material as described above is not particularly limited as long as the object of the present invention can be achieved, and a general one can be employed.

In case where a thermoplastic resin is used as the matrix resin, it is possible to carry out the resin impregnation using a press machine having a heating function. The press machine is not particularly restricted as long as it can realize the temperature and pressure required for impregnating the matrix resin, and a usual press machine having a planar platen which goes up and down, or a so-called a double belt press machine having a mechanism in which a pair of endless steel belts are traveled, can be used. In such an impregnation process, a method can also be employed wherein after a matrix resin is made into a sheet-like form such as a film, a nonwoven fabric or a woven fabric, it is laminated with a discontinuous reinforcing fiber sheet, and at that state, the matrix resin is molten and impregnated into the sheet integrally using the above-described press machine, etc., wherein a sheet-like assembly integrated with a discontinuous reinforcing fiber sheet and a matrix resin in advance is laminated, and thereafter, the matrix resin is molten and impregnated, or wherein to a sheet-like assembly integrated with a discontinuous reinforcing fiber sheet and a matrix resin in advance, a matrix resin sheet made into a sheet-like form such as a film, a nonwoven fabric or a woven fabric is further laminated, and then, the matrix resin is molten and impregnated.

In case where a thermosetting resin is used for the matrix resin, there is no particular limitation as long as it can realize the temperature and pressure required for impregnation of the matrix resin, and it is possible to use a usual press machine having a planar platen which goes up and down, a so-called double belt press machine having a mechanism for travelling a pair of endless steel belts, a press roll machine having upper and lower rolls for nipping therebetween, and the like, can be used. In such an impregnation process, a method can be exemplified wherein after a matrix resin is formed into a sheet on a releasing film, a discontinuous reinforcing fiber sheet is sandwiched between matrix resin sheets, pressed, and impregnated. At this time, in order to perform the impregnation more reliably, a method of reducing in pressure to a vacuum condition, removing air inside the seat, and then pressurizing can be exemplified as one preferable example.

Further, in the present invention, as long as the subject matter of the present invention is not obstructed, as the discontinuous reinforcing fiber sheet, a sandwich structure of a continuous reinforcing fiber sheet and a discontinuous reinforcing fiber sheet may be employed to prepare a reinforcing fiber composite material. In the sandwich structure, a discontinuous reinforcing fiber sheet may be used for any of the surface layer and the core layer, and by using a continuous reinforcing fiber sheet for the surface layer and a discontinuous reinforcing fiber sheet for the core layer, because the mechanical properties and the surface quality when made into a reinforcing fiber composite material are excellent, such a structure can be exemplified as a preferable example. Here, although the reinforcing fibers used for the continuous reinforcing fiber sheet or the discontinuous reinforcing fiber sheet is not particularly limited, for example, carbon fibers, glass fibers, aramid fibers, alumina fibers, silicon carbide fibers, boron fibers, metal fibers, natural fibers, mineral fibers, etc. can be used, and these may be used at a condition of one kind or a combination of two or more kinds. As the reinforcing fiber formation for the continuous reinforcing fiber sheet, a general one can be used as long as the subject matter of the present invention is not obstructed. For example, can be exemplified a unidirectional reinforcing fiber sheet in which reinforcing fibers are oriented in one direction, a reinforcing fiber laminated sheet in which unidirectional reinforcing fiber sheets are laminated in multiple directions, a woven fabric reinforcing fiber sheet in which reinforcing fibers are woven, etc. As the reinforcing fiber formation for the discontinuous reinforcing fiber sheet, a general one can be used as long as the subject matter of the present invention is not obstructed. For example, can be exemplified a chopped strand sheet in which a strand is cut at a predetermined length and cut pieces are scattered, a dry discontinuous reinforcing fiber sheet manufactured using a carding machine or an air laid machine, a wet discontinuous reinforcing fiber sheet manufactured using a paper making apparatus, etc.

Next, Examples and Comparative Examples of the present invention will be explained.

First, characteristics and determination methods used in the Examples and Comparative Examples will be explained.

(1) Determination of width of discontinuous reinforcing fiber aggregate:

A sample of 100 mm x 100 mm was cut out from the reinforcing fiber composite material, and the cut sample was heated in an electric furnace heated to 550 °C for 1 to 2 hours to burn off organic substances such as matrix resin. The discontinuous reinforcing fiber sheet was taken out from the burned-out sample, and the discontinuous reinforcing fibers were carefully taken out from the discontinuous reinforcing fiber sheet at units of aggregates using tweezers or the like, so that all of them were not collapsed in shape, and the discontinuous reinforcing fiber aggregates were all taken out by the tweezers. All of the taken-out discontinuous reinforcing fiber aggregates were placed on a flat table, and the widths of both end parts of each discontinuous reinforcing fiber aggregate and the width of a part of the discontinuous reinforcing fiber aggregate in a direction perpendicular to the longitudinal direction, which was narrowest in width (narrowest part), when the discontinuous reinforcing fiber aggregate was projected on a two-dimensional plane were measured using a caliper capable of measuring up to 0.1 mm. At this time, in order to measure the width more accurately, the discontinuous reinforcing fiber aggregate was placed on a flat table, and the width of the discontinuous reinforcing fiber aggregate when projected on a two-dimensional plane may be measured using a digital microscope (supplied by Keyence Corporation). The obtained widths of the narrowest part and both end parts were described on a recording paper. For discontinuous reinforcing fibers with a bundle width of the narrowest part less than 0.1 mm, they were collectively picked up as discontinuous reinforcing fibers (B) opened to single fiber level.

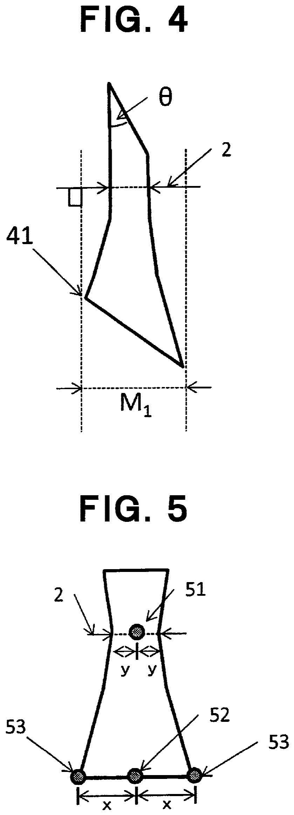

At this time, the width and the thickness were determined by judging the long side of the cross section in the fiber direction at the end part of the discontinuous reinforcing fiber aggregate as the width and the short side as the thickness, and in case where the end part of the discontinuous reinforcing fiber aggregate was cut with the angle $\theta$, as shown in Fig. 4, the width was determined as the width in a direction perpendicular to the longitudinal direction when the discontinuous reinforcing fiber aggregate was projected on the two-dimensional plane. In the illustrated example, symbol 2 indicates the narrowest part of the fan-shaped discontinuous reinforcing fiber aggregate, and $M_1$ indicates a width of an end part 41 of the fan-shaped discontinuous reinforcing fiber aggregate widened and split in case where a strand was cut with an angle.

In case where the discontinuous reinforcing fiber sheet cannot be taken out successfully from the reinforcing fiber composite material, it may be similarly determined from a discontinuous reinforcing fiber sheet which is impregnated with the matrix resin.

(2) Determination of thickness of discontinuous reinforcing fiber aggregate:

With respect to all the above-described discontinuous reinforcing fiber aggregates in which the widths of the end part and the narrowest part were measured, the thickness of the discontinuous reinforcing fiber aggregate was measured at the end part and the narrowest part using a micrometer. At this time, the discontinuous reinforcing fibers were carefully treated so as not to disturb the aggregate shape, as shown in Fig. 5, the position was adjusted by tweezers so that the midpoint between the end points at the end part became the center of the indenter of the micrometer, and the thickness of the end part of the discontinuous reinforcing fiber aggregate was measured. Next, for the narrowest part of the discontinuous reinforcing fiber aggregate, the position was similarly adjusted so that the midpoint at the narrowest part became the center of the indenter of the micrometer, and the thickness of the narrowest part was measured. In case of measuring a discontinuous reinforcing fiber aggregate in which the end part is split and widened to have a width twice or more larger than the indenter diameter of the micrometer, three points of thickness at both end points and the midpoint of the end part are measured, and an average value thereof is used. Namely, in the example shown in Fig. 5, symbol 51 indicates a thickness measurement point of the narrowest part 2, symbol 52 indicates a midpoint between the end points as the thickness measurement point of the end part, and symbols 52 and 53 indicate thickness measurement points of the end part in case where the width of the end part is larger two times or more than the indenter diameter of the micrometer, respectively. The thicknesses of both end parts and the narrowest part obtained were described on the recording paper similarly to the aforementioned width. With respect to a discontinuous reinforcing fiber aggregate in which it is difficult to measure the thickness of the end part, the thickness of the narrowest part is measured, and from the ratio of the thickness and the width of the narrowest part and the width of the end part, the thickness of the end part may be calculated using the following equation.

Thickness of end part = thickness of narrowest part x width of narrowest part/width of end part

(3) Method of judging the fan-shaped discontinuous reinforcing fiber aggregate (A) and determining the weight ratio:

From the width and thickness of the discontinuous reinforcing fiber aggregate obtained as described above, the aspect ratio of the narrowest part and the aspect ratio of the end part were calculated for all discontinuous reinforcing fiber aggregates, using the following equation.

Aspect ratio of narrowest part = width of narrowest part/thickness of narrowest part

Aspect ratio of end part = width of end part/thickness of end part

From the calculated aspect ratios, the discontinuous reinforcing fiber aggregates were classified into the fan-shaped discontinuous reinforcing fiber aggregates (A) each in which an aspect ratio of at least one end part is 1.5 times or more an aspect ratio of the narrowest part and the other non-fan-shaped discontinuous reinforcing fiber aggregates (C). After the classification, using a balance capable of measuring up to 1/10,000 g, the total weight of the fan-shaped discontinuous reinforcing fiber aggregates (A) and the total weight of the non-fan-shaped discontinuous reinforcing fiber aggregates (C) and the discontinuous reinforcing fiber (B) which were opened up to single fiber level were measured. After the measurement, the ratio by weight of the weight of the fan-shaped discontinuous reinforcing fiber aggregates (A) to the weight of the whole of the discontinuous reinforcing fibers was calculated using the following equation.
The ratio of fan-shaped discontinuous reinforcing fiber aggregates (A) = total weight of fan-shaped discontinuous reinforcing fiber aggregates (A)/(total weight of fan-shaped discontinuous reinforcing fiber aggregates (A) + total weight of non-fan-shaped discontinuous reinforcing fiber aggregates (C) + total weight of s discontinuous reinforcing fibers (B) opened to single fiber level)
At this time, among the fan-shaped discontinuous reinforcing fiber aggregates (A), the respective total weights of fan-shaped discontinuous reinforcing fiber aggregates (A-2) having an aspect ratio of at least one end part of 1.8 times or more the aspect ratio of the narrowest part, fan-shaped discontinuous reinforcing fiber aggregates (A-3) of 2.0 times or more, and fan-shaped discontinuous reinforcing fiber aggregates (A-4) having aspect ratios at both end parts 1.5 times or more the aspect ratio of the narrowest part, were measured similarly, and the respective ratios by weight of (A-2) to (A-4) to the total weight of the whole of the discontinuous reinforcing fibers were calculated in the same manner as in the fan-shaped discontinuous reinforcing fiber aggregates (A).

(4) Calculation of widening angle:

From the above-described widths of the end part and the narrowest part of the fan-shaped discontinuous reinforcing fiber aggregate (A), the widening angle at end part of each fan-shaped discontinuous reinforcing fiber aggregate (A) was calculated by the following equation.

Widening angle = $\tan^{-1}$ {(width of one end part - width of narrowest part) / 2 / distance between one end part and narrowest part}

Here, the total weight of fan-shaped discontinuous reinforcing fiber aggregates (A-5) having a widening angle at least at one end part of more than 5° and less than 90° in the fan-shaped discontinuous reinforcing fiber aggregates (A) was measured similarly to in the above-described (A -2) to (A-4), and the weight ratio relative to the weight of the whole of the discontinuous fibers was calculated.

(5) Vf (content of reinforcing fibers in reinforcing fiber composite material (%)):

A sample of about 2g was cut out from the reinforcing fiber composite material and its mass was determined. Thereafter, the sample was heated in an electric furnace heated to 500 to 600 °C. for about 1 to 2 hours to burn off organic substances such as matrix resin. After cooling to a room temperature, the mass of the remaining discontinuous reinforcing fibers was determined. The ratio of the mass of the discontinuous reinforcing fibers to the mass of the sample before burning off the organic substances such as the matrix resin was determined, and it was defined as the content (%) of the reinforcing fibers.

(6) Flexural strength, flexural elastic modulus, CV value, isotropy:

The flexural strength and flexural elastic modulus were determined based on JIS-K7171. With respect to the flexural strength, the CV value of the flexural strength (coefficient of variation [%]) was also calculated. A case where the CV value of the flexural strength was less than 10% was determined to be good (o) because the variation of the flexural strength was small, and a case of 10% or more was determined to be not good (x) because the variation of the flexural strength was great.

The sample to be subjected to the bending test was measured with respect to an arbitrary direction (0° direction) on the two-dimensional plane and a direction of 90° relative to the 0° direction, and in case where the ratio of the average value in the 0° direction/the average value in the 90 ° direction falls within a range of 1.3 to 0.77, it is determined to be isotropic (o), and the rest was determined to be anisotropic (x).

(7) Evaluation of flowability:

<In case where the matrix resin is a thermoplastic resin>

One piece of the discontinuous reinforcing fiber composite material having a size of 100 mm x 100 mm x 2 mm t (thickness) was placed in a press platen heated to a melting point of the thermoplastic resin + 40 °C, the part with the size of 100 mm x 100 mm was pressed at 10 MPa for 300 seconds, and thereafter, at the pressurized state, the sample was cooled to a solidification temperature of the thermoplastic resin of - 50 °C, and the sample was taken out. The area A2 of the sheet after this pressing and the area A1 of the sheet before the pressing were measured, and A2/A1/2 mm t was defined as flowability (%/mm).

<In case where the matrix resin is a thermosetting resin>

One piece of the discontinuous reinforcing fiber composite material precursor having a size of 100 mm x 100 mm x 2 mm t (thickness), uncured with the matrix resin, was placed in a press platen heated to a temperature at which the curing time from the start of flow of the matrix resin until finish of the curing was within a range of 300 to 400 seconds, and the part with the size of 100 mm x 100 mm was pressed at 10 MPa for 600 seconds. It was placed in a pressed press board and pressed against a size of 100 mm × 100 mm at 10 MPa for 600 seconds. The area A2 of the sheet after this pressing and the area A1 of the sheet before the pressing were measured, and A2/A1/2 mm t was defined as flowability (%/mm).

(8) Number average fiber length determination method:

A sample having a size of 100 mm x 100 mm was cut out from the discontinuous reinforcing fiber composite material, and thereafter, the sample was heated in an electric furnace heated to 500 °C for about 1 to 2 hours to burn off organic substances such as a matrix resin. Discontinuous reinforcing fibers were randomly extracted from discontinuous reinforcing fiber sheets remaining after cooling to a room temperature with tweezers, and the lengths thereof were measured to 0.1 mm unit with an optical microscope or a scanning electron microscope, and the number average fiber length of the discontinuous reinforcing fibers was calculated by an equation of number average fiber length = E Li / 400. Here, Li is the measured fiber length.

Examples

First, the reinforcing fibers and the matrix resin used in Examples and Comparative Examples of the present invention will be explained.

Carbon fiber strand (1) (abbreviated as carbon fiber (1) in the tables described later):

A continuous carbon fiber strand having a fiber diameter of 7 $\mu$m, a tensile elastic modulus of 230 GPa and a filament number of 12,000 was used.

Carbon fiber strand (2) (abbreviated as carbon fiber (2) in the tables described later):

A continuous carbon fiber strand having a fiber diameter of 7.2 $\mu$m, a tensile elastic modulus of 242 GPa and a filament number of 50,000 was used.

Matrix resin (1):

Nylon resin (supplied by Toray Industries, Inc., CM1001, trade name "Amilan" (registered trademark)) was used.

Matrix resin (2):

100 parts by mass of a vinyl ester (VE) resin (supplied by Dow · Chemical Co., Ltd., "DELAKEN" (registered trademark) 790), 1 part by mass of tert-butyl peroxybenzoate (supplied by Japan Oil Co., Ltd., "PERBUTYL" (registered trademark) Z), 2 parts by mass of zinc stearate (Sakai Chemical Industry Co., Ltd., SZ-2000 and 4 parts by mass of magnesium oxide (supplied by Kyowa Chemical Industry Co., Ltd., MgO #40).

Example 1:

A discontinuous carbon fiber sheet was prepared by using the apparatus as shown in Fig. 3. After air pressure 0.4 MPa was intermittently applied to the tip of the carbon fiber strand (1) for 0.2 second to widen and split one end part, the strand was cut with a cutter so that the fiber length became 20 mm, and fan-shaped discontinuous carbon fiber aggregates were continuously produced and deposited on a conveyer to obtain a discontinuous carbon fiber sheet with an areal weight of 100 g/m$^2$. The discontinuous carbon fiber sheet thus obtained was a discontinuous carbon fiber sheet containing fan-shaped discontinuous carbon fiber aggregates. Next, a matrix resin film having an areal weight of 100 g/m$^2$ composed of the matrix resin (1) was prepared by using a film forming machine, and the obtained discontinuous carbon fiber sheet and the matrix resin film were laminated so that a carbon fiber composite material flat plate to be obtained had a thickness of 2 mm and Vf = 40%, the laminate was preheated for 300 seconds in a flat plate metal mold of a press machine heated to 260 °C, while applying a pressure of 5 MPa, the laminate was pressed for 300 seconds, and it was cooled to 50 °C at the pressurized condition to obtain a flat plate of carbon fiber composite material having a thickness of 2 mm. The carbon fiber content in the obtained carbon fiber composite material was Vf = 40%. The obtained flat plate had no warpage, when the flexural strengths in the 0° and 90° directions were measured from the carbon fiber composite material, the average value of the flexural strengths in the 0° and 90° directions was 520 MPa, the CV value of the flexural strengths in the respective directions was less than 5%, and with respect to the flexural strength and the flexural modulus, the average value in the direction of 0°/the average value in the direction of 90° was within a range of 1.3 to 0.77 capable of exhibiting two-dimensional isotropy.
Next, a sample having a size of 100 mm x 100 mm was cut out from the obtained carbon fiber composite material flat plate, and the sample cut out was heated in an electric furnace heated to 550 °C for 2 hours to burn off the matrix resin and a discontinuous carbon fiber sheet was taken out. All discontinuous carbon fiber aggregates in the discontinuous carbon fiber sheet were taken out from the taken-out discontinuous carbon fiber sheet using tweezers, the widths and the thicknesses thereof were measured, and the weight ratios of fan-shaped discontinuous carbon fiber aggregates (A), fan-shaped discontinuous carbon fiber aggregates (A-2), fan-shaped discontinuous carbon fiber aggregates (A-3) and fan-shaped discontinuous carbon fiber aggregates at both end parts (A-4) relative to the discontinuous carbon fiber sheet were determined. At this time, the weight ratio of the fan-shaped discontinuous carbon fiber aggregates (A) in the discontinuous carbon fiber sheet was 13% by weight, that of the fan-shaped discontinuous carbon fiber aggregates (A-2) was 12% by weight, that of the fan-shaped discontinuous carbon fiber aggregates (A-3) was 12% by weight, and that of the fan-shaped discontinuous carbon fiber aggregates at both end parts (A-4) was 1% by weight.
Further, a sample having a size of 100 mm x 100 mm was cut out from the carbon fiber composite material flat plate, and when the flowability was evaluated, the flowability was 150 %/mm. The results of evaluation are shown in Table 1.

Example 2:

A carbon fiber composite material flat plate was produced and the evaluation was carried out in a manner similar to in Example 1 other than a condition where air was intermittently blown for 0.2 second to the tip part of the strand with an air pressure of 0.25 MPa to obtain a discontinuous carbon fiber sheet containing fan-shaped discontinuous carbon fiber aggregates in each of which one end part was widened and split. The results are shown in Table 1.

Example 3:

A carbon fiber composite material flat plate was produced and the evaluation was carried out in a manner similar to in Example 1 other than a condition where the cut length was set at 30 mm, before cutting, the strand end was hit against a wall vibrating at 10 Hz, after preliminary widening and splitting of the end part were performed beforehand, 0.1 MPa air pressure was intermittently applied for 0.1 second to the tip of the strand to obtain a discontinuous carbon fiber sheet containing fan-shaped discontinuous carbon fiber aggregates in each of which one end part was widened and split. The results are shown in Table 1.

Example 4:

A carbon fiber composite material flat plate was produced and the evaluation was carried out in a manner similar to in Example 1 other than a condition where, before cutting, the strand end was hit against a wall vibrating at 10 Hz, after preliminary widening and splitting of the end part were performed beforehand, 0.07 MPa air pressure was intermittently applied for 0.1 second to the end of the strand to obtain a discontinuous carbon fiber sheet containing fan-shaped discontinuous carbon fiber aggregates in each of which one end part was widened and split. The results are shown in Table 1.

Example 5:

A carbon fiber composite material flat plate was produced and the evaluation was carried out in a manner similar to in Example 1 other than a condition where the cut length was set at 30 mm, before cutting, the strand end was hit against a wall vibrating at 10 Hz, after preliminary widening and splitting of the end part were performed beforehand, 0.1 MPa air pressure was intermittently applied for 0.1 second to the end of the strand, and after cutting, 0.1 MPa air pressure was intermittently applied for 0.1 second to the other end of the strand, to obtain a discontinuous carbon fiber sheet containing both-end fan-shaped discontinuous carbon fiber aggregates in each of which both end parts were widened and split. The results are shown in Table 1.

Example 6:

A carbon fiber composite material flat plate was produced and the evaluation was carried out in a manner similar to in Example 1 other than a condition where the cut length was set at 30 mm, before cutting, the strand end was hit against a wall vibrating at 10 Hz, after preliminary widening and splitting of the end part were performed beforehand, 0.07 MPa air pressure was intermittently applied for 0.1 second to the end of the strand, and after cutting, 0.07 MPa air pressure was intermittently applied for 0.1 second to the other end of the strand, to obtain a discontinuous carbon fiber sheet containing both-end fan-shaped discontinuous carbon fiber aggregates in each of which both end parts were widened and split. The results are shown in Table 1.

Example 7:

A carbon fiber composite material flat plate was produced and the evaluation was carried out in a manner similar to in Example 1 other than a condition where the strand end was hit against a wall vibrating at 5 Hz, after preliminary widening and splitting of the end part were performed beforehand, 0.1 MPa air pressure was intermittently applied for 0.1 second to the end of the strand, and after one end part was widened and split, the angle for conveying the strand was set at 15° relative to the cutter blade, the strand was cut with the angle, to obtain a discontinuous carbon fiber sheet containing fan-shaped discontinuous carbon fiber aggregates. The results are shown in Table 1.

Example 8:

A discontinuous carbon fiber sheet containing fan-shaped discontinuous carbon fiber aggregates, in each of which one end part was widened and split by applying 0.2 MPa air pressure intermittently for 0.1 second to the end of the strand, was obtained. Next, a matrix resin (2) film was prepared wherein the matrix resin (2) paste was coated on a release film made of polypropylene using a doctor blade, and the areal weight of the film was controlled so that the carbon fiber content in the carbon fiber composite material to be obtained from the discontinuous carbon fiber sheet was Vf = 40%. A discontinuous carbon fiber sheet laminate prepared by laminating the obtained discontinuous carbon fiber sheets was sandwiched between the matrix resin (2) films, and after the matrix resin (2) was impregnated into the discontinuous carbon fiber sheet laminate, the matrix resin (2) was sufficiently thickened by leaving in a condition of 40 °C x 24 hours to obtain a sheet-like carbon fiber composite material precursor. Next, a carbon fiber composite material flat plate was produced and the evaluation was carried out in a manner similar to in Example 1 other than a condition where the precursor was set in the flat plate mold of the press machine heated to 135 °C so that charge rate (the ratio of the area of the sheet-like molding material to the mold area when the mold is viewed from above) became 50%, and by pressurizing it for 600 seconds while applying a pressure of 5 MPa, a flat plate of a carbon fiber composite material having a thickness of 2 mm and Vf=40% was obtained. The results are shown in Table 1.

Example 9:

A carbon fiber composite material flat plate was produced and the evaluation was carried out in a manner similar to in Example 1 other than a condition where the carbon fiber strand (2) was used, and 0.1 MPa air pressure was intermittently applied for 0.1 second to the tip of the strand to obtain a discontinuous carbon fiber sheet containing fan-shaped discontinuous carbon fiber aggregates in each of which one end part was widened and split. The results are shown in Table 1.

Example 10:

A carbon fiber composite material flat plate was produced and the evaluation was carried out in a manner similar to in Example 1 other than a condition where the carbon fiber strand (2) was used, the strand end was hit against a wall vibrating at 5 Hz, after preliminary widening and splitting of the end part were performed beforehand, 0.1 MPa air pressure was intermittently applied for 0.1 second to the end of the strand to obtain a discontinuous carbon fiber sheet containing fan-shaped discontinuous carbon fiber aggregates in each of which one end part was widened and split. The results are shown in Table 1.

Comparative Example 1:

The carbon fiber strand (1) was cut as it was to a fiber length of 20 mm and a chopped strand discontinuous carbon fiber sheet having the formation of the discontinuous carbon fiber aggregates, each of which has approximately uniform width and thickness with respect to the longitudinal direction (fiber length direction), was obtained. A carbon fiber composite material flat plate was produced and the evaluation was carried out in a manner similar to in Example 1 other than a condition where a resin film made of the matrix resin (1) and having an areal weight of 100 $g/m^2$ was laminated to the obtained discontinuous carbon fiber sheet so that the carbon fiber content in the carbon fiber composite material to be obtained became Vf = 40%, it was preheated in the mold of the press machine heated to 260 °C for 300 seconds, it was pressurized for 300 seconds while being applied with a pressure of 5 MPa, and it was cooled to 50 °C at the pressurized condition to obtain a carbon fiber composite material flat plate having a thickness of 2 mm. The results are shown in Table 2. The obtained carbon fiber composite material was poor in flexural strength and flexural elastic modulus, the fluctuation in CV value was large, and it was not two-dimensional isotropic.

Comparative Example 2:

A widened carbon fiber strand (1) having a carbon fiber strand width of 15 mm was obtained by vibrating and widening the carbon fiber strand (1) with a vibration rod vibrating at 10 Hz. A carbon fiber composite material flat plate was produced and the evaluation was carried out in a manner similar to in Example 1 other than a condition where the obtained widened carbon fiber strand (1) was slit at an interval of 0.5 mm using a disk-shaped splitting blade, and the slit carbon fiber strand (1) was cut at a fiber length of 15 mm to obtain a discontinuous carbon fiber sheet. The results are shown in Table 2. In the obtained discontinuous carbon fiber sheet, most of the discontinuous carbon fibers forming it were formed with the divided chopped strands, which were divided in the width direction at an approximately uniform width relatively to the longitudinal direction (fiber length direction), and with the chopped strands in each of which at least one end part was divided and widened, but each of which did not satisfy the aggregate shape, and the obtained carbon fiber composite material was poor in flowability.

Comparative Example 3:

A carbon fiber composite material flat plate was produced and the evaluation was carried out in a manner similar to in Example 1 other than a condition where carbon fiber strand (1) was vibrated and widened by a vibration rod vibrating at 10 Hz, and the widened carbon fiber strand (1) having a carbon fiber strand width of 11 mm was cut at a fiber length of 20 mm to obtain a discontinuous carbon fiber sheet. The results are shown in Table 2. The obtained carbon fiber composite material was poor in flowability.

Comparative Example 4:

A carbon fiber composite material flat plate was produced and the evaluation was carried out in a manner similar to in Comparative Example 1 other than a condition of using the carbon fiber strand (2). The results are shown in Table 2.

[Table 1]

| Example | | 1 | 2 | 3 | 4 | 5 |
|---|---|---|---|---|---|---|
| Carbon fiber | | Carbon fiber (1) | Carbon fiber (1) | Carbon fiber (1) | Carbon fiber (1) | Carbon fiber (1) |
| Cut length (mm) | | 20 | 20 | 30 | 20 | 30 |
| Matrix resin | | Matrix resin (1) | Matrix resin (1) | Matrix resin (1) | Matrix resin (1) | Matrix resin (1) |
| Vf(%) | | 40 | 40 | 40 | 40 | 40 |
| Fan-shaped discontinuous carbon fiber weight ratio (% by weight) | (A) | 13 | 32 | 74 | 90 | 54 |
| | (A-2) | 12 | 30 | 74 | 90 | 54 |
| | (A-3) | 12 | 29 | 74 | 90 | 52 |
| | (A-4) | 1 | 3 | 2 | 2 | 26 |
| | (A-5) | 13 | 32 | 74 | 90 | 54 |
| Flexural strength (Mpa) | | 520 | 500 | 475 | 460 | 494 |
| Flexural elastic modulus (MPa) | | 28 | 27 | 26 | 26 | 28 |
| CV value | | ○ | ○ | ○ | ○ | ○ |
| Isotropy | | ○ | ○ | ○ | ○ | ○ |
| Flowability (% / mm) | | 150 | 170 | 200 | 240 | 210 |
| | | | | | | |
| Example | | 6 | 7 | 8 | 9 | 10 |
| Carbon fiber | | Carbon fiber (1) | Carbon fiber (1) | Carbon fiber (1) | Carbon fiber (2) | Carbon fiber (2) |
| Cut length (mm) | | 30 | 20 | 20 | 20 | 20 |
| Matrix resin | | Matrix resin (1) | Matrix resin (1) | Matrix resin (2) | Matrix resin (1) | Matrix resin (1) |
| Vf(%) | | 40 | 40 | 40 | 40 | 40 |

(continued)

| Example | | 6 | 7 | 8 | 9 | 10 |
|---|---|---|---|---|---|---|
| Fan-shaped discontinuous carbon fiber weight ratio (% by weight) | (A) | 92 | 70 | 40 | 42 | 68 |
| | (A-2) | 80 | 70 | 39 | 40 | 68 |
| | (A-3) | 79 | 70 | 39 | 40 | 66 |
| | (A-4) | 57 | 2 | 3 | 2 | 1 |
| | (A-5) | 92 | 70 | 40 | 42 | 68 |
| Flexural strength (Mpa) | | 495 | 500 | 440 | 430 | 440 |
| Flexural elastic modulus (MPa) | | 28 | 28 | 27 | 26 | 26 |
| CV value | | ○ | ○ | ○ | ○ | ○ |
| Isotropy | | ○ | ○ | ○ | ○ | ○ |
| Flowability (% / mm) | | 240 | 230 | 180 | 170 | 190 |

[Table 2]

| Comparative Example | | 1 | 2 | 3 | 4 |
|---|---|---|---|---|---|
| Carbon fiber | | Carbon fiber (1) | Carbon fiber (1) | Carbon fiber (1) | Carbon fiber (2) |
| Cut length (mm) | | 20 | 15 | 20 | 20 |
| Matrix resin | | Matrix resin (1) | Matrix resin (1) | Matrix resin (1) | Matrix resin (1) |
| Vf(%) | | 40 | 40 | 40 | 40 |
| Fan-shaped discontinuous carbon fiber weight ratio (% by weight) | (A) | 0 | 3 | 2 | 0 |
| | (A-2) | 0 | 2 | 1 | 0 |
| | (A-3) | 0 | 2 | 1 | 0 |
| | (A-4) | 0 | 0 | 0 | 0 |
| | (A-5) | 0 | 3 | 2 | 0 |
| Flexural strength (Mpa) | | 280 | 530 | 510 | 180 |
| Flexural elastic modulus (MPa) | | 20 | 28 | 28 | 16 |
| CV value | | × | ○ | ○ | × |
| Isotropy | | × | ○ | × | × |
| Flowability (% / mm) | | 160 | 110 | 140 | 145 |

Industrial Applicability

The reinforcing fiber composite material according to the present invention can be applied to the production of any fiber reinforced molded article required with satisfaction of both high flowability and mechanical properties and small fluctuation of the mechanical properties, that have not been able to be achieved in the conventional technologies.

Explanation of symbols

1: fan-shaped discontinuous reinforcing fiber aggregate (A)
2: narrowest part

$2A_1$, $2A_2$, 2B, 2C, 2D, 2E, 2F: narrowest part of each form

3,4: one end part

5: projection from (B) direction

6: projection from (C) direction

21a, 21b, 22, 23, 24, 25, 26: each form of fan-shaped discontinuous reinforcing fiber aggregate (A)

31: conveying roll

32: cutter

33: reinforcing fiber strand

34: air head

35: wall for end part widening and/or splitting

36: cutter table

37: conveyer

41: end part of fan-shaped discontinuous reinforcing fiber aggregate

51: thickness measurement point of narrowest part

52: thickness measurement point of end part

53: thickness measurement point of end part in case where width of end part is larger two times or more than indenter diameter of micrometer

## Claims

1. A reinforcing fiber composite material **characterized by** comprising discontinuous reinforcing fibers containing at least discontinuous reinforcing fiber aggregates and a matrix resin, wherein a fan-shaped discontinuous reinforcing fiber aggregate (A) is contained at an amount of 5% by weight or more in said discontinuous reinforcing fibers, and wherein said fan-shaped discontinuous reinforcing fiber aggregate (A) has a fan-like section in which an aspect ratio at least at one end part of a discontinuous reinforcing fiber aggregate (a width of said discontinuous reinforcing fiber aggregate Mn/a thickness of said discontinuous reinforcing fiber aggregate Hn, here, "n" indicates a position of any one end part of said discontinuous reinforcing fiber aggregate, and n = 1 or 2) is 1.5 times or more relative to an aspect ratio (m/h) at a narrowest part at which a width of said discontinuous reinforcing fiber aggregate in a direction across an orientation direction of said discontinuous reinforcing fibers is smallest when said discontinuous reinforcing fiber aggregate is projected two-dimensionally.

2. The reinforcing fiber composite material according to claim 1, wherein at least one end part of said fan-shaped discontinuous reinforcing fiber aggregate (A) is branched into two or more parts when projecting the fan-shaped discontinuous reinforcing fiber aggregate (A) on a two-dimensional plane.

3. The reinforcing fiber composite material according to claim 1 or 2, wherein said fan-shaped discontinuous reinforcing fiber aggregate (A) has an aspect ratio of at least one end part of more than 30.

4. The reinforcing fiber composite material according to any one of claims 1 to 3, wherein with respect to a width of at least one end part and a width of said narrowest part of said fan-shaped discontinuous reinforcing fiber aggregate (A) when projecting said fan-shaped discontinuous reinforcing fiber aggregate (A) two-dimensionally, said one end part width/said narrowest part width is in a range of 1.5 or more and less than 50.

5. The reinforcing fiber composite material according to any one of claims 1 to 4, wherein with respect to a thickness of at least one end part and a thickness of said narrowest part of said fan-shaped discontinuous reinforcing fiber aggregate (A), said one end part thickness/said narrowest part thickness is in a range of 0.01 or more and less than 0.9.

6. The reinforcing fiber composite material according to any one of claims 1 to 5, wherein a widening angle, calculated from a width of at least one end part and a width of said narrowest part of said fan-shaped discontinuous reinforcing fiber aggregate (A) when projecting said fan-shaped discontinuous reinforcing fiber aggregate (A) two-dimensionally, is in a range of more than 5° and less than 90°,
here,

$$\text{widening angle} = \tan^{-1} \{(\text{Mn} - \text{m}) / 2 / \text{Ln}\}$$

(L indicates a distance from said narrowest part to said one end part, "n" indicates a position of any one end part of said discontinuous reinforcing fiber aggregate, and n = 1 or 2).

7. The reinforcing fiber composite material according to any one of claims 1 to 6, wherein a number average fiber length of said discontinuous reinforcing fibers is in a range of 5 mm or more and less than 100 mm.

8. The reinforcing fiber composite material according to any one of claims 1 to 7, wherein a shape of said fan-shaped discontinuous reinforcing fiber aggregate (A) when two-dimensionally projected is one selected from the group of I, X, Y, V, N, M shapes and a combination thereof.

9. The reinforcing fiber composite material according to any one of claims 1 to 8, wherein a ratio of said aspect ratio of each end part to said aspect ratio of said narrowest part of said fan-shaped discontinuous reinforcing fiber aggregate (A) (end part aspect ratio/narrowest part aspect ratio) is in a range of 1.5 or more and less than 50 at both end parts.

10. The reinforcing fiber composite material according to any one of claims 1 to 9, wherein an end part of said fan-shaped discontinuous reinforcing fiber aggregate (A) is cut with an angle $\theta$ of 2° to 30° relative to a longitudinal direction of said discontinuous reinforcing fiber aggregate.

11. The reinforcing fiber composite material according to any one of claims 1 to 10, wherein carbon fibers are contained as said discontinuous reinforcing fibers.

# FIG. 1

(A)

(B)

(C)

P: Vertical plane

H: Horizontal plane

# FIG. 2

(A) I shape  (B) X shape  (C) Y shape

(D) V shape  (E) N shape  (F) M shape

EP 3 199 316 A1

# FIG. 3

EP 3 199 316 A1

# FIG. 4

# FIG. 5

## INTERNATIONAL SEARCH REPORT

International application No.

PCT/JP2015/075043

### A. CLASSIFICATION OF SUBJECT MATTER
*B29B11/16*(2006.01)i, *C08J5/04*(2006.01)i, *C08J5/24*(2006.01)i

According to International Patent Classification (IPC) or to both national classification and IPC

### B. FIELDS SEARCHED

Minimum documentation searched (classification system followed by classification symbols)
B29B11/16, C08J5/04, C08J5/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | US 2004/0018358 A1 (W.R. GRACE & Co.-CONN.),<br>29 January 2004 (29.01.2004),<br>claims; paragraphs [0051] to [0053]; fig. 1<br>& US 2001/0051266 A1    & US 6503625 B1<br>& US 6197423 B1       & US 2001/0023019 A1<br>& US 6265056 B1       & WO 2002/002853 A1<br>& EP 1315857 A         & AU 2422501 A<br>& AU 756343 B          & CA 2386416 A | 1-11 |

☒   Further documents are listed in the continuation of Box C.      ☐   See patent family annex.

| | |
|---|---|
| \*   Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 16 November 2015 (16.11.15) | 24 November 2015 (24.11.15) |

| Name and mailing address of the ISA/<br>    Japan Patent Office<br>    3-4-3,Kasumigaseki,Chiyoda-ku,<br>    Tokyo 100-8915,Japan | Authorized officer |
|---|---|
| | Telephone No. |

Form PCT/ISA/210 (second sheet) (July 2009)

**INTERNATIONAL SEARCH REPORT**

International application No.

PCT/JP2015/075043

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-501085 A (Carbon Fibre Technologies Ltd.), 12 January 2006 (12.01.2006), fig. 3 & US 2006/0125156 A1 fig. 3 & GB 222753 D & GB 2409662 A & GB 222753 D0 & WO 2004/030897 A1 & EP 1545864 A & AU 2003271873 A | 1-11 |
| A | WO 2008/149615 A1 (Toray Industries, Inc.), 11 December 2008 (11.12.2008), fig. 5 & JP 5572947 B & US 2010/0178495 A1 fig. 5 & EP 2151418 A1 & CN 101711230 A | 1-11 |
| A | JP 2009-062474 A (Toray Industries, Inc.), 26 March 2009 (26.03.2009), fig. 3 (Family: none) | 1-11 |

Form PCT/ISA/210 (continuation of second sheet) (July 2009)

**EP 3 199 316 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014201315 A
- WO 2014021316 A
- JP 2008254191 A